Europäisches Patentamt

(19) European Patent Office

Office européen des brevets

(11) Publication number: **0 212 778**
**A1**

(12) # EUROPEAN PATENT APPLICATION

(21) Application number: **86303576.2**

(22) Date of filing: **12.05.86**

(51) Int. Cl.⁴: **F 16 K 11/07**

(30) Priority: **18.05.85 GB 8512624**

(43) Date of publication of application: **04.03.87**
**Bulletin 87/10**

(84) Designated Contracting States: **AT BE DE FR GB IT**

(71) Applicant: **MARTONAIR LIMITED, 128 St. Margarets Road, Twickenham TW1 1RJ (GB)**

(72) Inventor: **Day, John, 24 Prospect Road Ash Vale Aldershot, Hampshire GU12 5ED (GB)**

(74) Representative: **Lane, Michael John et al, IMI Plc Patents and Licensing Department P.O. Box 216, Birmingham B6 7BA (GB)**

(54) **Spool valve having static O-ring seals.**

(57) A spool valve comprising a valve body (1) having a cylindrical bore communicating with ports (2) in the cylindrical wall of the body; a spool (3) slidable axially within the bore to control the admission and discharge of fluid through the ports (2); deformable O-rings (5) positioned co-axially within the bore and spaced apart axially, there being an O-ring (5) at each side of each port (2) in the axial direction of the bore; spacers (4) positioned between the O-rings (5) having end faces to effect axial compression of the O-rings (5) to effect sealing of each O-ring (5) with the cylindrical wall of the bore and the cylindrical surface of the spool (3), the end face of each spacer (4) having a profile defined by a radially-inner portion shaped to engage the adjacent O-ring (5) only over a portion of its convex surface immediately adjacent its radially-inner periphery and extending through a radial distance not greater than the length of the radius of the circular cross-section of the O-ring (5), the remainder of the end face of the spacer (4) radially beyond the radially-inner profiled portion (8) being spaced axially from the O-ring (5).

SPOOL VALVE HAVING STATIC O-RING SEALS

The invention relates to a spool or piston valve, hereinafter called a 'spool valve', having static O-ring seals sealing at their radially outer peripheries against the wall of a cylindrical bore in the valve body and at their radially inner peripheries against the cylindrical surface of the spool or piston, hereinafter called the "spool".

A spool valve of this type usually has a plurality of ports extending transversely through the wall of the valve body and through which compressed air or other fluid to be controlled is passed under the control of the spool which is movable axially in the bore of the valve body, there being an annular seal positioned co-axially in the bore of the valve body at each side of each port in the axial direction of the valve body and the spool. The annular seals are usually located from axial movement in the bore of the valve body by spacers arranged co-axially around the spool and positioned within the bore in the valve body. The annular seals must be compressed in the axial direction by the spacers sufficiently to produce effective sealing forces at the radially outer and inner peripheries of the seals; but the sealing forces between the seals and their inner peripheries and the peripheral surfaces of the spool must not be so great as to cause excessive friction and therefore to impede the axial sliding movement of the spool.

It has been proposed hitherto to use specially shaped annular seals having a non-circular cross-section and some seals of this kind have incorporated rigid internal reinforcement. These special seals are therefore more expensive than standard O-ring seals and would usually be manufactured as a result of a special order.

An object of the invention is to provide a spool valve in which standard O-ring seals can be employed and in which the compression of the seals can be controlled without impeding the sliding movement of the spool.

According to the invention, a spool valve, as hereinbefore defined, comprises a valve body having a cylindrical bore communicating with a plurality of ports in the cylindrical wall of the body; a spool, as hereinbefore defined, mounted co-axially within the bore with annular clearance between the spool and the cylindrical wall of the bore and slidable axially within the bore to control the admission and discharge of fluid through the ports; a plurality of deformable annular seals of substantially circular cross-section (hereinafter called O-ring seals) positioned co-axially within the bore and spaced apart in the axial direction thereof, there being an O-ring seal at each side of each port in the axial direction of the bore; a plurality of spacers positioned in the annular clearance and having end faces to effect axial compression of the respective o-ring seals to effect sealing between each O-ring seal and the respective cylindrical wall of the bore and the cylindrical surface of the spool at the radially outer and inner peripheries of the O-ring seal, the end face adjacent an O-ring seal of each spacer having a profile defined by a radially-inner portion shaped to engage the respective O-ring seal only over a portion of its convex surface immediately adjacent the radially-inner periphery thereof and extending through a radial distance not greater than the length of the radius of the circular cross-section of the O-ring seal, the remainder of the end face of the spacer radially beyond said radially-inner profiled portion being spaced axially from the O-ring seal.

By shaping the end faces of the spacers in this way, only a radially-inner portion of each of the O-ring seals will be axially compressed between the respective spacers. This will result in only minimal reduction in the internal diameter of the O-ring seals because the elastomeric material from which the O-ring seals are made and displaced by the compression of the O-rings in the axial direction will flow radially-outwardly into the spaces

between the O-rings and the radially-outer parts of the end faces of the spacers. As a result, the O-rings although making sealing contact at their radially- inner and outer peripheries will not produce excessive frictional forces on the spool and so the axial movement of the latter will not be impeded. Furthermore, substantial variations in axial compression of the O-rings can be accommodated with little change in the frictional forces between the spool and the O-rings.

The profile of each end face of a spacer may be defined by a radially-inner portion engageable with the O-ring seal and a radially-outer portion stepped axially away from the O-ring seal at the outer end of the radially-inner portion.

The radially-inner portion may have a flat radial face or be of concave shape relative to the radial cross-section of the O-ring seal. Where the radially-inner portion is of concave shape, this may be of part-circular shape in radial cross-section having a radius of curvature substantially equal to the radius of the radial cross-section of the O-ring seal. Alternatively, the concave surface may have a radius of curvature which increases in the radially-outward direction from a radius which is substantially equal to the radius of the radial cross-section of the O-ring seal.

The spacers may be tubular or of arcuate shape as viewed in the axial direction.

The invention also includes a tubular spacer for use in a spool valve, as set out hereinbefore, the spacer having an end face having a profile defined by a radially-inner portion shaped to engage the O-ring seal only over a portion of its convex surface immediately adjacent the radially-inner periphery thereof and extending through a radial distance not greater than the length of the radius of the circular cross-section of the O-ring seal,

the remainder of the end face of the spacer radially beyond said radially-inner profiled portion being spaced axially from the O-ring seal.

By way of example a typical spool valve in accordance with the invention and having two alternative spacers is now described with reference to the accompanying drawings, in which:-

Figure 1 is an axial cross-section through the spool valve, and.

Figure 2 is a part axial section showing part of two O-ring seals and associated alternative spacers each having a different end face profile.

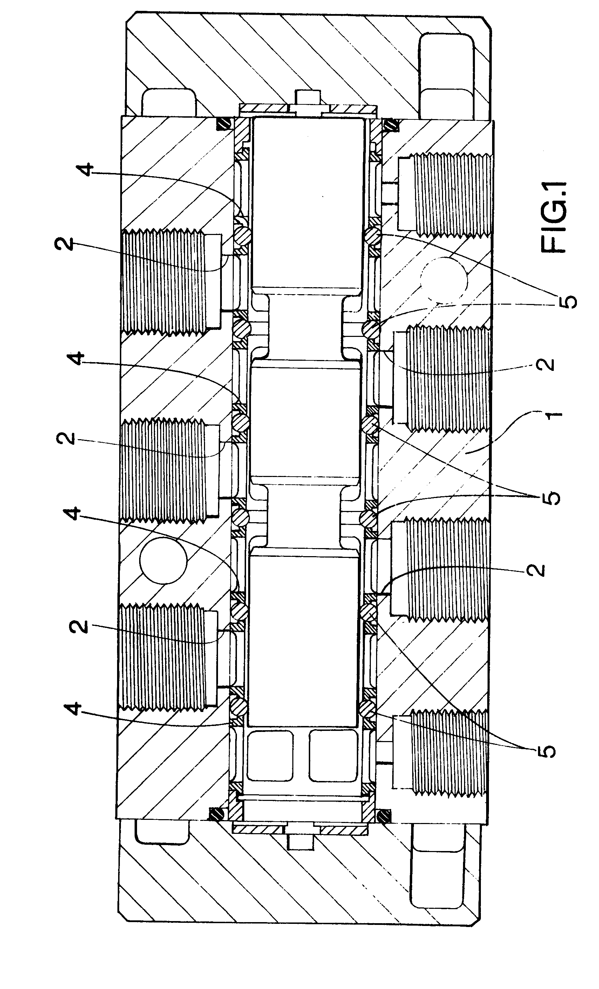

Figure 1 shows a typical pneumatic spool valve comprising a cylindrical body 1 having five radial ports 2 therein controlled by a spool 3 slidable axially within the bore of the body 1. The cylindrical control portions of the spool are spaced with annular clearances within the cylindrical bore. The annular clearance spaces contain tubular spacers 4 each having end faces which locate standard compressible O-ring seals 5 positioned one at each axial end of each port 2. In such valves, as proposed hitherto, the spacers are held together axially and so compress the O-rings 5 axially. This hitherto has caused the diameters of the radially-outer and inner peripheral surfaces of the O-rings to change to effect sealing with the cylindrical wall of the bore and the cylindrical surfaces of the spool respectively. If the diameters of the inner peripheral surfaces of the O-rings were to be decreased too much, the frictional forces between the O-ring seals and the spool may impede the axial sliding of the spool 3.

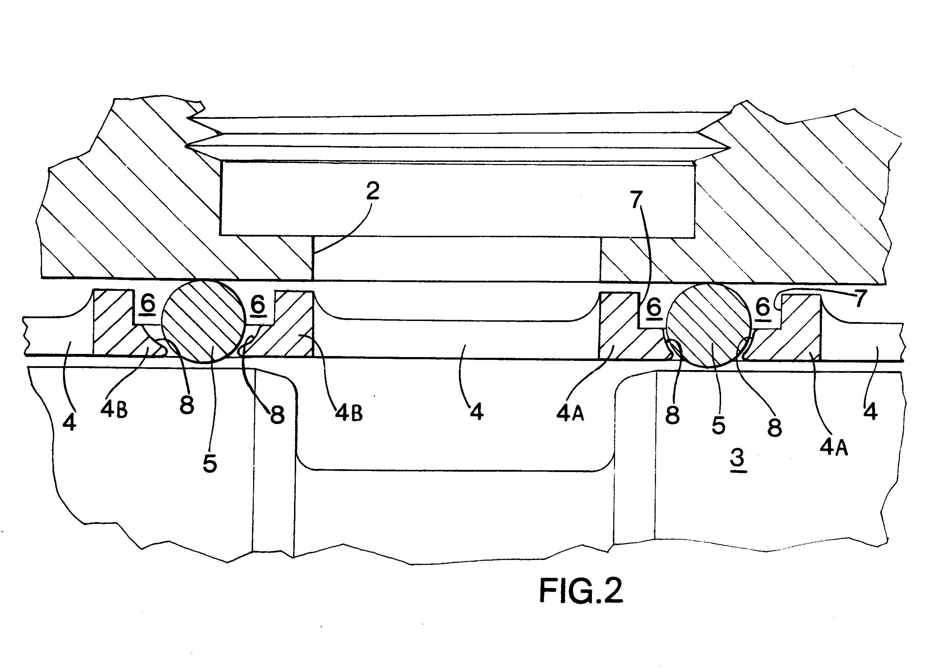

In accordance with the invention, the reduction of the diameters of the inner peripheral surfaces of the O-rings are controlled by shaping the end faces of the spacers, as in either of the alternative components shown in Figure 2. In Figure 2, two alternative end face profiles for the spacers 4 are shown at 4A and 4B respectively.

The profile of the end faces of the spacers 4 shown at 4A at the right-hand end of Figure 3 is such that the end faces of the spacers 4 engage only a radially-inner portion of each end face of the O-ring seal 5, of which only the upper circular radial cross-section is shown. The radial extent of the engagement between the spacers and the O-ring seal is only from immediately adjacent the radially-inner periphery of the O-ring seal to a position not beyond the annular centre-line of the circular cross-section of the O-ring seal , that is the extent of engagement is not greater than the length of the radius of the circular cross-section of the O-ring seal 5. In the illustrated examplefor spacers as profiled at 4A, the radial length of engagement is less than the radius of the circular cross-section. The profiled end faces 8 of the spacers 4 which engage the O-ring seal 5 are concave and conform to the part-circular convex shape of the cross-section over the whole circumferential length of the O-ring seal. The axial compression of the O-ring seal 5 effects sealing at both the radially-inner and outer peripheral surfaces but does not cause excessive reduction in the radially-inner diameter of the O-ring seal, because displacement of the elastomeric material from which the O-ring seal is made will occur in the radially-outer direction into the regions 6 where the end faces 7 are spaced from the O-ring seal and do not engage it. In this way, the sealing at the radially-inner periphery of the O-ring seal 5 does not cause excessive frictional forces and so the O-ring seal will not impede the axial movement of the spool 3.

At the left-hand side of Figure 2, the profiled end faces of the spacers 4 as shown at 4B have their concave engaging faces 8 curved axially away from the O-ring seal 5 except at the extreme radially-inner periphery thereof. This has the result that the extreme radially-inner part of the O-ring seal 5 is compressed before contact is made between the spacers 4 and the O-ring seal nearer to the centre-line of the circular cross-section of the O-ring seal. This has been found to reduce further the effect of the axial compression of the O-ring seal on the internal diameter of the O-ring seal.

Although the contacting end faces 8 have been shaped to conform with the circular curvature of the cross-section of the O-ring seal, the end faces 8 may be of any desired shape, for example, a straight-line in radial cross-section.

The spacers 4 may be metal die castings or plastics mouldings. Alternatively, they may be machines from a tube or a bar of metal or a plastics material.

CLAIMS

1.  A spool valve comprising a valve body (1) having a cylindrical bore communicating with a plurality of ports (2) in the cylindrical wall of the body; a spool (3) mounted co-axially within the bore with annular clearance between the spool (3) and the cylindrical wall of the bore and slidable axially within the bore to control the admission and discharge of fluid through the ports (2); a plurality of deformable 0-ring seals (5) of substantially circular cross-section positioned co-axially within the bore and spaced apart in the axial direction thereof, there being an 0-ring seal (5) at each side of each port (2) in the axial direction of the bore; a plurality of spacers (4) positioned in the annular clearance and having end faces to effect axial compression of the respective 0-ring seals (5) to effect sealing between each 0-ring seal (5) and the respective cylindrical wall of the bore and the cylindrical surface of the spool (3) at the radially outer and inner peripheries of the 0-ring seal (5), characterised in that the end face adjacent an 0-ring seal (5) of each spacer (4) has a profile defined by a radially-inner portion (8) shaped to engage the respective 0-ring seal (5) only over a portion of its convex surface immediately adjacent the radially-inner periphery thereof and extending through a radial distance not greater than the length of the radius of the circular cross-section of the 0-ring seal (5), the remainder of the end face of the spacer (4) radially beyond said radially-inner profiled portion (8) being spaced axially from the 0-ring seal (5).

2.    A spool valve as claimed in Claim 1 in which the profile of each end face of a spacer (4) is defined by a radially-inner portion (8) engageable with the O-ring seal (5) and a radially-outer portion (17) stepped axially away from the O-ring seal (5) at the outer end of the radially-inner portion (8).

3.    A spool valve as claimed in Claim 2 in which the radially-inner portion of each spacer (4) has a flat radial face.

4.    A spool valve as claimed in Claim 2 in which the radially-inner portion of each spacer (4) is of concave shape relative to the radial cross-section of the O-ring seal (5).

5.    A spool valve as claimed in Claim 4 in which the concave portion of each spacer (4) is of part-circular shape in radial cross-section, having a radius of curvature substantially equal to the radius of the radial cross-section of the O-ring seal (5).

6.    A spool valve as claimed in Claim 4 in which the concave portion of each spacer (4) has a radius of curvature which increases in the radially-outward direction from a radius which is substantially equal to the radius of the radial cross-section of the O-ring seal (5).

7.    A spool valve as claimed in any preceding claim in which each spacer (4) is of tubular shape as viewed in the axial direction.

8.    A spool valve as claimed in any of Claims 1-6 in which each spacer (4) is of arcuate shape as viewed in the axial direction.

9. A tubular spacer for use in a spool valve according to Claim 1, the spacer being characterised in that it has an end face having a profile defined by a radially-inner portion shaped to engage the O-ring seal (5) only over a portion of its convex surface immediately adjacent the radially-inner periphery thereof and extending through a radial distance not greater than the length of the radius of the circular cross-section of the O-ring seal (5),the remainder of the end face of the spacer (4) radially beyond said radially-inner profiled portion (8) being spaced axially from the O-ring seal (5).

FIG.1

0 212 778

FIG.2

| DOCUMENTS CONSIDERED TO BE RELEVANT | | | EP 86303576.2 | |
|---|---|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 4 234 162 (KAY)<br>* Column 6, lines 34-39; fig. 4 *<br><br>---- | 1-5,7,8 | F 16 K 11/07 |
| | | | **TECHNICAL FIELDS SEARCHED (Int. Cl.4)** |
| | | | F 16 K 11/00<br>F 15 B 13/00 |

The present search report has been drawn up for all claims

| Place of search | Date of completion of the search | Examiner |
|---|---|---|
| VIENNA | 18-11-1986 | ROUSSARIAN |